# FASCICULE DE BREVET EUROPEEN

(11) **EP 0 382 771 B1**
(45) Date de publication et mention de la délivrance du brevet: **08.12.1993**
(21) Numéro de dépôt: 88909204.5
(22) Date de dépôt: 28.09.1988
(51) Int. Cl.: A61C 8/00

(54) **MOIGNON DESTINE A ETRE FIXE SUR LA PARTIE ENDOSTALE D'UN IMPLANT DENTAIRE**
STIFT ZUM ANBRINGEN AUF DEM ENDOSTALEN TEIL EINES ZAHNIMPLANTATS
STUMP TO BE FIXED TO THE ENDOSTAL PART OF A DENTAL IMPLANT

(30) Priorité: 08.10.1987 IT 484688
(43) Date de publication de la demande: 22.08.1990
(73) Titulaire: SCATENA, Aldo, I-55100 Lucca (IT)
(72) Inventeur: SCATENA, Aldo, I-55100 Lucca (IT)
(74) Mandataire: Hranitzky, Wilhelm Max
(86) Numéro de dépôt international: EP8800878
(87) Numéro de publication internationale: WO8903200

(56) Documents cités:
- EP-A- 0 126 624
- EP-A- 0 231 400
- AT-B- 385 196
- BE-A- 887 735
- FR-A- 1 584 711
- FR-A- 2 491 326

## Description

La présente invention concerne un moignon destiné à être fixé sur la partie endostale d'un implant dentaire. et tel que décrit dans le préambule de la revendication 1.

On connaît des implants dentaires de plusieurs types, comme par exemple les implants à lames, les implants à vis, etc. Ces implants sont généralement constitués d'une partie dite endostale, destinée à être implantée dans l'os de la mâchoire et d'une partie de tête destinée à sortir de la gencive et à supporter une dent ou une prothèse, ces deux parties constituant un ensemble monolithique. Ces implants présentent l'inconvénient de constituer des points durs par rapport aux dents voisines qui, lorsqu'elles sont saines, ont une résilience de 0.2 millimètres.

Un implant permettant de remédier partiellement aux inconvénients ci-dessus est décrit dans le brevet français 1 584 711. Cet implant est constitué par un corps fixé sur un cavalier posé sur le maxillaire, ledit corps portant un filetage intérieur recevant l'extrémité filetée d'une pièce cylindrique recouverte par un capuchon solidaire de la prothèse, ledit capuchon pouvant coulisser axialement et élastiquement sur la pièce cylindrique, un élément élastique étant interposé à l'interface capuchon - pièce cylindrique, à l'extrémité supérieure de ladite pièce cylindrique. Un tel implant ne fonctionne bien que lorsque la force s'exerçant sur la prothèse agit essentiellement verticalement, c'est-à-dire dans la direction de l'axe de l'implant. Toutefois, dans la réalité, cette situation idéale est plutôt rare, et généralement, la composante horizontale de la force s'exerçant sur la prothèse est importante. Il s'ensuit que l'implant décrit dans le brevet français 1 584 711, ne permet pas de recréer les conditions physiologiques d'une dent saine.

Le but de l'invention est de réaliser un moignon destiné à être fixé sur la partie endostale d'un implant dentaire qui permette de recréer les conditions physiologiques correspondant à celles d'une dent saine, afin de remédier aux inconvénients des implants connus.

A cet effet, l'invention a pour objet un moignon destiné à être fixé sur la partie endostale d'un implant dentaire, comprenant un noyau central comportant une partie de tête et une partie inférieure munie d'organes de fixation pour la fixation du moignon sur l'implant, et un capuchon destiné à recouvrir au moins une partie de ladite partie de tête, un premier organe élastique étant disposé à l'interface capuchon - noyau central à l'extrémité supérieure de la partie de tête, un second organe élastique étant disposé à l'interface capuchon - noyau central dans une première rainure située sur le pourtour de la partie de tête du noyau central, l'ensemble étant agencé de façon à permettre un mouvement relatif du capuchon par rapport au noyau central, des organes de retenue disposés latéralement étant prévus pour limiter le mouvement vertical relatif du capuchon par rapport au noyau central.

Selon une forme d'exécution la première rainure est située sur le pourtour de la partie de tête du noyau central, au niveau de l'extrémité inférieure du capuchon, le capuchon s'appuyant sur ledit second organe élastique.

Selon une variante d'exécution, au moins un troisième organe élastique est disposé à l'interface capuchon - noyau central, dans une deuxième rainure située sur le pourtour de la partie de tête dudit noyau central, entre la première rainure et l'extrémité supérieure de la partie de tête du noyau central, le moignon pouvant comporter au moins une troisième rainure située sur le pourtour du moignon, les organes de retenue comprenant un organe de blocage dont une extrémité, de dimensions extérieures inférieures à la largeur de ladite troisième rainure, est engagée dans la troisième rainure.

La troisième rainure peut être située entre les première et deuxième rainures.

Le deuxième organe élastique peut être agencé de façon à présenter une surface pour l'appui vertical du capuchon et une surface pour l'appui latéral dudit capuchon.

L'extrémité inférieure du capuchon peut comporter un rebord intérieur destiné à permettre l'appui vertical du capuchon sur le deuxième organe élastique et une partie saillante périphérique qui vient se positionner en regard d'un rebord extérieur supérieur de la partie inférieure du noyau central, et agencé de façon à constituer une butée aux mouvements relatifs du capuchon par rapport au noyau central.

Selon une autre variante d'exécution, les dimensions extérieures du premier organe élastique sont sensiblement supérieures aux dimensions extérieures de la partie de tête du noyau central, le second organe élastique comportant une partie supérieure de dimensions extérieures sensiblement supérieures aux dimensions extérieures de la partie de tête du noyau central et une partie inférieure de dimensions extérieures supérieures à celle de sa partie supérieure, de façon à constituer un rebord horizontal sur lequel vient s appuyer verticalement le capuchon, la retenue du capuchon sur le noyau central étant réalisée par le frottement de la paroi interne du capuchon contre les surfaces verticales extérieures des organes élastiques, le premier organe élastique étant retenu contre l'extrémité supérieure de la partie de tête du noyau central par un organe de retenue solidaire du noyau central.

Quelle que soit la forme d'exécution, le noyau central et le capuchon peuvent être de forme générale cylindrique.

L'invention sera mieux comprise à l'aide de la description qui suit, donnée à titre d'exemple, et qui se réfère aux dessins sur lesquels :
- la fig. 1: est une coupe verticale d'un premier exemple de moignon selon l'invention,
- la fig. 2: est une coupe horizontale suivant la ligne II-II de la fig. 1,
- la fig. 3: est une coupe horizontale selon la ligne III-III de la fig. 1, et
- la fig. 4: est une coupe verticale d'un second exemple de moignon selon l'invention.

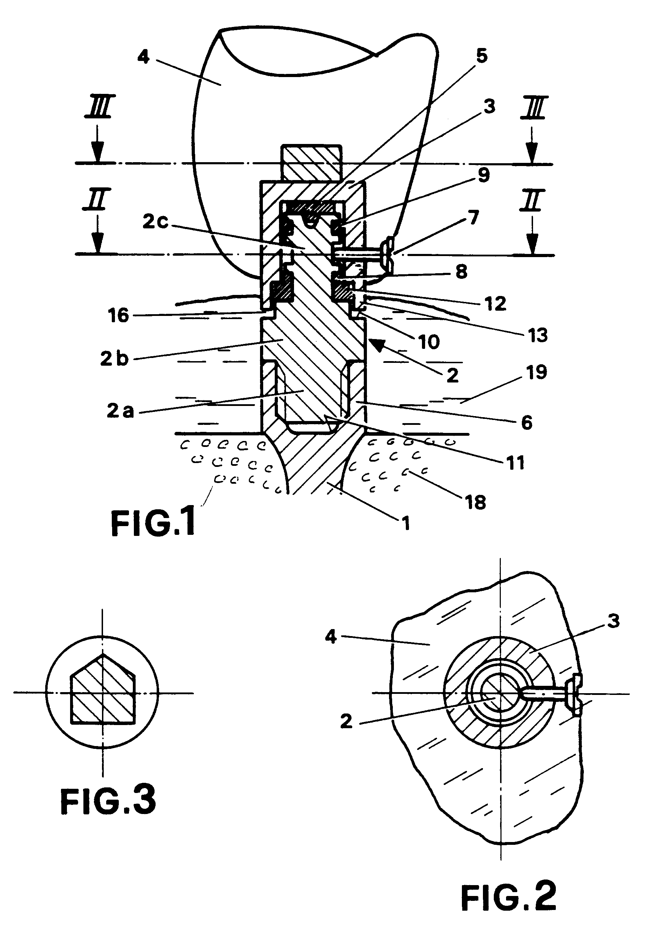

Le moignon représenté aux figures 1 à 3 est fixé sur la partie endostale 1 d'un implant dentaire ancrée dans l'os 18 de la mâchoire inférieure. L'extrémité supérieure 6 de la partie endostale comporte un logement 11 muni d'un pas de vis femelle dans lequel la partie inférieure du noyau central d'un moignon 2 est vissée. Le moignon, de préférence de forme cylindrique, comprend un noyau central 2 qui comporte une partie inférieure 2a munie d'un pas-de-vis mâle, destinée à être vissée dans le logement 11 de la partie endostale de l'implant, une partie de base 2b et une partie supérieure 2c. La partie supérieure 2c du noyau central comprend trois rainures horizontales réalisées sur son pourtour extérieur, soit une rainure inférieure, une rainure médiane et une rainure supérieure. Un capuchon 3 recouvre la partie supérieure du noyau central. Le diamètre intérieur du capuchon est choisi de façon à présenter un faible jeu avec le diamètre extérieur de la partie supérieure du noyau central, de façon à pouvoir être introduit par coulissement sur la partie supérieure dudit noyau central, et à permettre un déplacement vertical et latéral du capuchon par rapport au noyau central. La partie de base 2b du noyau central a un diamètre extérieur égal au diamètre extérieur du capuchon et comprend une partie supérieure de diamètre extérieur réduit, de façon à constituer un rebord périphérique horizontal 10. Le diamètre intérieur de l'extrémité inférieure 13 du capuchon est supérieur au diamètre intérieur du corps du capuchon, de façon à présenter un rebord périphérique horizontal 12. Un premier organe élastique 8, disposé dans la rainure inférieure du noyau central, comporte une partie supérieure dont l'épaisseur diamètrale est sensiblement supérieure à la profondeur de la rainure, et une partie inférieure dont le diamètre extérieur est supérieur au diamètre extérieur de sa partie supérieure, de façon à présenter un décrochement extérieur sur lequel le capuchon, par l'intermédiaire de son bord intérieur constituant le rebord 12, peut s'appuyer latéralement et verticalement. Un deuxième organe élastique 9 est disposé dans la rainure supérieure du noyau central, l'épaisseur dudit organe élastique étant sensiblement supérieure à la profondeur de ladite rainure supérieure. Un troisième organe élastique 5 ou coussinet est disposé sous le capuchon, à l'extrémité supérieure du noyau central. A l'état de repos, un interstice 16 est prévu entre l'extrémité inférieure 13 du capuchon et le rebord périphérique 10 du noyau central. Cet interstice permet au capuchon d'effectuer un mouvement vertical relatif par rapport au noyau central, lorsque les premier et troisième organes élastiques 8 et 5 sont comprimés sous l'effet d'une charge agissant sur la dent 4 fixée sur le capuchon 3. Le blocage du capuchon sur le noyau central est réalisé à l'aide d'une vis 7 vissée dans un trou réalisé dans la dent et la paroi du capuchon. Cette vis 7 comporte une partie d'extrémité qui dépasse a l'intérieur du capuchon et qui est engagée à l'intérieur de la rainure médiane. Le diamètre extérieur de la partie d'extrémité de la vis est inférieur à la hauteur de la rainure médiane, de façon à permettre le déplacement relatif du capuchon par rapport au noyau central lorsque les organes élastiques 8 et 5 sont comprimés sous l'effet de la charge. L'épaisseur de la partie inférieure du premier organe élastique 8 ainsi que l'épaisseur de l'organe élastique 5 peuvent par exemple être choisies de 0.5 millimètres. L'ensemble ainsi réalisé permet de recréer parfaitement les conditions physiologiques d'une dent, puisqu'il permet au capuchon, et donc à la dent, d'effectuer des mouvements latéraux grâce à la présence des organes élastiques 8 et 9, en plus des mouvements verticaux permis par les organes élastiques 8 et 5.

Afin de limiter le mouvement vertical relatif du capuchon par rapport au noyau central, la hauteur de la partie d'extrémité inférieure 13 du capuchon est choisie de façon que l'interstice 16 entre ladite partie d'extrémité et le rebord périphérique 10 du noyau central soit de l'ordre de 0.2 millimètres. Cette limitation est prévue pour le cas ou la qualité des organes élastiques viendrait à se dégrader.

Afin d'augmenter la flexibilité de l'ensemble, le diamètre extérieur de la partie de base peut être de dimension réduite dans sa partie médiane.

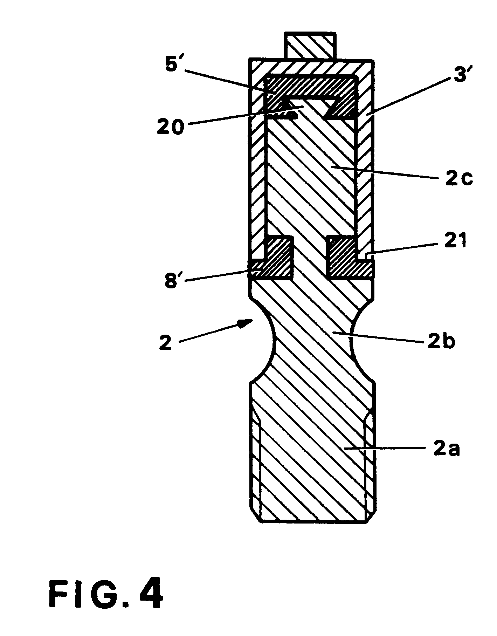

Le second exemple de moignon représenté à la figure 4 comprend un noyau central 2 de forme générale extérieure cylindrique comportant également une partie inférieure 2a munie d'un pas de vis mâle et destinée à être vissée dans le logement correspondant de la partie endostale d'un implant dentaire. La partie supérieure 2c du noyau central comporte à son extrémité supérieure une partie saillante 20, en forme de queue d'aronde sur laquelle est fixé et retenu un premier organe élastique 5' dont le diamètre extérieur est sensiblement supérieur au diamètre extérieur de la partie supérieure 2c du noyau central. Un second organe élastique 8' est disposé dans une rainure périphérique située à la base de la partie supérieure 2c du noyau central. Ce second organe élastique comporte une partie supérieure dont le diamètre extérieur est sensiblement supérieur au diamètre extérieur de la partie supérieure 2c du noyau central, et une partie inférieure de diamètre extérieur supérieur à celui de la partie supérieure, de façon à constituer un rebord 21 sur lequel vient s'appuyer un capuchon 3' également de forme cylindrique et dont le diamètre intérieur présente un faible jeu avec le diamètre extérieur de la partie supérieure 2c du noyau central. La présence des deux organes élastiques permet un déplacement vertical du capuchon par rapport au noyau central dû à l'élasticité des organes élastiques, le capuchon étant toutefois maintenu en place sur le noyau central par le frottement qu'exercent lesdits organes élastiques sur sa paroi intérieure. Afin d'augmenter la flexibilité latérale de l'ensemble, la partie de base 2b du noyau central dont la partie supérieure a un diamètre égal au diamètre extérieur du capuchon comporte un diamètre réduit dans sa partie médiane.

Les organes élastiques peuvent être constitués par exemple en résine synthétique, en toute matière à composantes de caoutchouc, en caoutchouc alimentaire ou en toute autre matière adéquate. Bien entendu, d'autres types d'organes élastiques peuvent être utilisés selon les cas, tels que par exemple des ressorts.

Le dispositif décrit ci-dessus peut être réalisé pour tous les types d'implants connus, que ces implants soient réalisés en titane, en céramique, en bioxyde d'aluminium, ou en toute autre matière, quelle que soit la forme de l'implant.

## Revendications

1. Moignon destiné à être fixé sur un implant dentaire, comprenant un noyau central (2) comportant une partie de tête (2c) et une partie inférieure (2a, 2b) munie d'organes de fixation pour la fixation du moignon sur l'implant, et un capuchon (3) destiné à recouvrir au moins une partie de ladite partie de tête, un premier organe élastique (5) étant disposé à l'interface capuchon - noyau central à l'extrémité supérieure de la partie de tête, l'ensemble étant agencé de façon à permettre un mouvement relatif du capuchon par rapport au noyau central, des organes de retenue disposés latéralement étant prévus pour limiter le mouvement vertical relatif du capuchon par rapport au noyau central, caractérisé en ce qu'il comporte un second organe élastique (8) disposé à l'interface capuchon - noyau central dans une première rainure située sur le pourtour de la partie de tête du noyau central, au niveau de l'extrémité inférieure du capuchon, ledit second organe élastique comportant des éléments destinés à permettre un appui vertical et un appui latéral du capuchon sur ledit second organe élastique.

2. Moignon selon la revendication 1, caractérisé en ce qu'au moins un troisième organe élastique (9) est disposé à l'interface capuchon - noyau central, dans une deuxième rainure située sur le pourtour de la partie de tête dudit noyau central, entre la première rainure et l'extrémité supérieure de la partie de tête du noyau central.

3. Moignon selon la revendication 2, caractérisé en ce qu'il comporte au moins une troisième rainure située sur la pourtour du moignon, et en ce que les organes de retenue comprennent un organe de blocage (7) dont une extrémité, de dimensions extérieures inférieures à la largeur de ladite troisième rainure, est engagée dans la troisième rainure.

4. Moignon selon la revendication 3, caractérisé en ce que la troisième rainure est située entre les première et deuxième rainures.

5. Moignon selon l'une des revendications 2 à 4, caractérisé en ce que le deuxième organe élastique (8) est agencé de façon à présenter une surface pour l'appui vertical du capuchon et une surface pour l'appui latéral dudit capuchon.

6. Moignon selon l'une des revendications 2 à 5, caractérisé en ce que l'extrémité inférieure du capuchon comporte un rebord intérieur destiné à permettre l'appui vertical du capuchon sur le deuxième organe élastique et une partie saillante périphérique qui vient se positionner en regard d'un rebord extérieur supérieur de la partie inférieure du noyau central, et agencé de façon à constituer une butée aux mouvements relatifs du capuchon par rapport au noyau central.

7. Moignon selon la revendication 1, caractérisé en ce que les dimensions extérieures du premier organe élastique sont sensiblement supérieures aux dimensions extérieures de la partie de tête du noyau central, le second organe élastique comportant une partie supérieure de dimensions extérieures sensiblement supérieures aux dimensions extérieures de la partie de tête du noyau central et une partie inférieure de dimensions extérieures supérieures à celle de sa partie supérieure, de façon à constituer un rebord horizontal (21) sur lequel vient s'appuyer verticalement le capuchon, la retenue du capuchon sur le noyau central étant réalisée par le frottement de la paroi interne du capuchon contre les surfaces verticales extérieures des organes élastiques, le premier organe élastique étant retenu contre l'extrémité supérieure de la partie de tête du noyau central par un organe de retenue (20) solidaire du noyau central.

8. Moignon selon l'une des revendications 1 à 6, caractérisé en ce que les organes de retenue comportent une vis (7) vissée à travers la dent et la paroi du capuchon, ladite vis comportant une partie d'extrémité qui dépasse à l'intérieur du capuchon et qui est engagée à l'intérieur d'un logement réalisé dans la partie de tête du noyau central, les dimensions dudit logement étant supérieures au diamètre de l'extrémité de la vis de façon à permettre le déplacement relatif du capuchon par rapport au noyau central lorsque les organes élastiques sont comprimés.

9. Moignon selon l'une des revendications précédentes, caractérisé en ce que le noyau central et le capuchon sont de forme générale cylindrique.

## Claims

1. Dowel intended to be fixed to the endosteal portion of a tooth implant, comprising a central core (2) including a head portion (2c) and a lower portion (2a, 2b) provided with attaching means for fixing the dowel to the implant, and a cap (3) intended to cover at least a portion of the head portion, a first elastic member (5) arranged on the interface cap - central core at the upper end of the head portion, the assembly being formed in a manner to permit a relative motion of the cap with respect to the central core and with retaining members being provided which are arranged laterally to limit the vertical relative motion of the cap with respect to the central core, characterized in that it comprises a second elastic member (8) located on the interface cap - central core in a first slot situated on the circumference of the head portion of the central core on the level of the lower end of the cap, said second elastic member comprising elements that are intended to permit a vertical support and a lateral support of the cap on said second elastic member.

2. Dowel according to claim 1, characterized in that at least a third elastic member (9) is arranged on the interface cap - central core in a second slot situated on the circumference of the head portion of said central core between the first slot and the upper end of the head portion of the central core.

3. Dowel according to claim 2, characterized in that it comprises at least a third slot situated on the circumference of the dowel, and in that the retaining members include a blocking element (7) whose one end of smaller outer dimensions than the width of said third slot engages the third slot.

4. Dowel according to claim 3, characterized in that the third slot is situated between the first and the second slots.

5. Dowel according to any of claims 2 to 4, characterized in that the second elastic member (8) is formed in a manner to exhibit a surface for the vertical support the cap and a surface for the lateral support of said cap.

6. Dowel according to any of claims 2 to 5, characterized in that the lower end of the cap comprises an inner marginal stop that is intended to permit the vertical support of the cap on the second elastic member, and a circumferential boss positioned opposite an outer marginal stop above the lower portion of the central core, and formed in a manner to constitute a stop against the relative motions of the cap with respect to the central core.

7. Dowel according to claim 1, characterized in that the outer dimensions of the first elastic member are substantially larger than the outer dimensions of the head portion of the central core, the second elastic member comprising an upper portion of substantially larger outer dimensions than the outer dimensions of the head portion of the central core, and a lower portion of larger outer dimensions than those of its upper portion, in a manner to constitute a horizontal border (21) on which the cap is vertically supported, retaining of the cap on the central core being realized by friction of the inside wall of the cap against the vertical outer surfaces of the elastic members, the first elastic member being retained against the upper end of the head portion of the central core by a retaining member (20) rigidly fixed to the central core.

8. Dowel according to any of claims 1 to 6, characterized in that the retaining means comprise a screw (7) screwed across the tooth and the wall of the cap, said screw comprising an end portion projecting into the interior of the cap and engaging the interior of an accomodation realized on the head portion of the central core, the dimensions of said accomodation being larger than the diameter of the end of the screw, in a manner to permit the relative displacement of the cap with respect to the central core when the elastic members are compressed.

9. Dowel according to any one of the previous claims, characterized in that the central core and the cap are of a generally cylindrical shape.

## Patentansprüche

1. Stift, der dazu bestimmt ist, am Endostalteil eines Zahnimplantates befestigt zu werden, und der einen zentralen Kern (2) mit einem Kopfteil (2c) und einen unteren, mit Befestigungsmitteln zur Befestigung des Stiftes am Implantat versehenen Teil (2a, 2b) aufweist, sowie eine Kappe (3), die dazu bestimmt ist, zumindest einen Teil der Kopfteiles abzudecken, ferner ein erstes elastisches Organ (5), das an der Grenzfläche zwischen der Kappe und dem zentralen Kern am oberen Ende des Kopfteiles angeordnet ist, wobei die Einheit derart ausgebildet ist, daß sie eine Relativbewegung der Kappe bezüglich des zentralen Kernes gestattet, und wobei seitlich angeordnete Halteorgane vorgesehen sind, um die vertikale Relativbewegung der Kappe bezüglich des zentralen Kernes zu begrenzen, dadurch gekennzeichnet, daß er ein zweites elastisches Organ (8) trägt, das an der Grenzfläche zwischen der Kappe und dem zentralen Kern in einem am Umfange des Kopfteiles des zentralen Kernes in der Höhe des unteren Endes der Kappe gelegenen Schlitz angeordnet ist, welches zweite elastische Organ Elemente trägt, die dazu bestimmt sind, eine vertikale Abstützung und eine seitliche Abstützung der Kappe am zweiten elastischen Organ zu gestatten.

2. Stift nach Anspruch 1, dadurch gekennzeichnet, daß mindestens ein drittes elastisches Organ an der Grenzfläche zwischen der Kappe und dem zentralen Kern in einem am Umfange des Kopfteiles des zentralen Kernes gelegenen zweiten Schlitz zwischen dem ersten Schlitze und dem oberen Ende des Kopfteiles des zentralen Kernes angeordnet ist.

3. Stift nach Anspruch 2, dadurch gekennzeichnet, daß er wenigstens einen dritten, am Umfange des Stiftes gelegenen Schlitz aufweist, und daß die Halteorgane ein Blockierungsorgan (7) aufweisen, dessen Ende mit geringeren Außenmaßen als die Breite des dritten Schlitzes in den dritten Schlitz eingreift.

4. Stift nach Anspruch 3, dadurch gekennzeichnet, daß der dritte Schlitz zwischen dem ersten und dem zweiten Schlitz gelegen ist.

5. Stift nach einem der Ansprüche 2 bis 4, dadurch gekennzeichnet, daß das zweite elastische Organ derart ausgebildet ist, daß es eine Fläche für die vertikale Abstützung der Kappe und eine Fläche für die seitliche Abstützung der Kappe aufweist.

6. Stift nach einem der Ansprüche 2 bis 5, dadurch gekennzeichnet, daß das untere Ende der Kappe einen inneren Randanschlag aufweist, der dazu bestimmt ist, die vertikale Abstützung der Kappe am zweiten elastischen Organ zu gestatten, sowie einen Umfangsvorsprung, der gegenüber einem äußeren Randanschlag oberhalb des Unterteiles des zentralen Kernes angeordnet und derart ausgebildet ist, daß er einen Anschlag gegenüber den Relativbewegungen der Kappe bezüglich des zentralen Kernes bildet.

7. Stift nach Anspruch 1, dadurch gekennzeichnet, daß die Außenabmessungen des ersten elastischen Organes im wesentlichen größer als die Außenabmessungen des Kopfteiles des zentralen Kernes sind, wobei das zweite elastische Organ einen Oberteil mit im wesentlichen größeren Außenabmessungen als die Außenabmessungen des Kopfteiles des zentralen Kernes aufweist, sowie einen Unterteil mit größeren Außenabmessungen als diejenigen seines Oberteiles, so daß ein horizontaler Rand gebildet wird, an dem sich die Kappe in Vertikalrichtung abstützt, wobei die Halterung der Kappe am zentralen Kern durch Reibung der Innenwand der Kappe an den vertikalen Außenflächen der elastischen Organe verwirklicht ist, von denen das erste elastische Organ am oberen Ende des Kopfteiles des zentralen Kernes durch ein mit dem zentralen Kern fest verbundenes Halteorgan festgehalten ist.

8. Stift nach einem der Ansprüche 1 bis 6, dadurch gekennzeichnet, daß die Halteorgane eine quer durch den Zahn und die Wand der Kappe geschraubte Schraube (7) aufweisen, welche Schraube einen Endabschnitt trägt, der sich in das Innere der Kappe hineinerstreckt und der in das Innere eines am Kopfteil des zentralen Kernes vorgesehenen Aufnahmeraumes eingreift, wobei die Abmessungen dieses Aufnahmeraumes dermaßen größer als der Durchmesser des Endes der Schraube ist, daß sie die Relativverschiebung der Kappe bezüglich des zentralen Kernes gestatten, wenn die elastischen Organe zusammengedrückt werden.

9. Stift nach einem der vorhergehenden Ansprüche, dadurch gekennzeichnet, daß der zentrale Kern und die Kappe allgemein von Zylinderform sind.
